# FASCICULE DE BREVET EUROPEEN

(11) **EP 4 355 982 B1**
(45) Date de publication et mention de la délivrance du brevet: **25.02.2026**
(21) Numéro de dépôt: 22735540.1
(22) Date de dépôt: 06.06.2022
(51) Int. Cl.: F01D 11/12

(54) **REVETEMENT ABRADABLE A STRUCTURE NID D'ABEILLES EN MATERIAU COMPOSITE A MATRICE CERAMIQUE EN FIBRES COURTES**
ABREIBBARE BESCHICHTUNG MIT WABENSTRUKTUR AUS VERBUNDMATERIAL MIT EINER KERAMISCHEN MATRIX AUS KURZEN FASERN
ABRADABLE COATING HAVING A HONEYCOMB STRUCTURE MADE OF COMPOSITE MATERIAL HAVING A CERAMIC MATRIX MADE OF SHORT FIBRES

(30) Priorité: 15.06.2021 FR 2106286
(43) Date de publication de la demande: 24.04.2024
(73) Titulaire: SAFRAN AIRCRAFT ENGINES, 75015 Paris (FR); Safran Ceramics, 33185 Le Haillan (FR)
(72) Inventeur: JARROSSAY, Clément, 77550 MOISSY-CRAMAYEL (FR); GAILLARD, Aurélien, 77550 MOISSY-CRAMAYEL (FR); RICHARD, Yann, 77550 MOISSY-CRAMAYEL (FR)
(74) Mandataire: Cabinet Beau de Loménie
(86) Numéro de dépôt international: PCT/FR2022/051071
(87) Numéro de publication internationale: WO 2022/263740

(56) Documents cités:
- WO-A1-2019/040079
- CN-A- 111 018 537
- US-A1- 2019 292 931

## Description

### Domaine Technique

La présente invention se rapporte au domaine général des revêtements abradables, en particulier aux revêtements abradables comprenant une structure de cellules tubulaires, et plus particulièrement aux revêtements abradables dont la structure à cellules tubulaires est réalisée en matériau composite à renfort fibreux de fibres courtes discontinues densifié par une matrice céramique.

### Technique antérieure

Un anneau de turbomachine comprend un revêtement abradable placé en regard de léchettes situées sur un rotor en vis-à-vis de l'anneau. En fonctionnement, les léchettes du rotor peuvent venir au contact du revêtement abradable en question. Celui-ci va alors être usiné par l'aubage mobile, ce qui permet de maîtriser le jeu entre l'anneau et optimiser les pertes aérodynamiques garantissant ainsi le fonctionnement nominal et l'intégrité de la machine.

Les structures à cellules tubulaires de ces revêtements sont habituellement métalliques. Néanmoins, ils entrainent une augmentation de la masse de l'anneau et nécessitent également un refroidissement de leur température. En effet, ces revêtements sont directement dans la veine, c'est-à-dire dans un environnement de gaz chauds issus de la combustion, et éloignés du refroidissement provenant des circuits secondaires. De plus, il n'est pas possible de les réaliser en matériau composite à matrice céramique (matériau CMC) à fibres longues, car leur épaisseur est trop fine, inférieure à 0,2 mm, pour pouvoir tisser les fibres du matériau CMC.

WO2019/040079 divulgue un revêtement abradable selon l'art antérieur.

Il est donc souhaitable de disposer d'un revêtement abradable pouvant s'adapter plus facilement aux géométries complexes et résistant aux hautes températures.

### Exposé de l'invention

L'invention concerne un revêtement abradable comprenant une structure à cellules tubulaires, caractérisé en ce que la structure à cellules tubulaires comprend un renfort fibreux de fibres courtes discontinues densifié par une matrice céramique, les fibres courtes discontinues ayant une longueur comprise entre 50 µm et 500 µm.

L'avantage d'une structure en matériau CMC en fibres courtes est de pouvoir réaliser des formes complexes et d'épaisseur fine grâce à la fabrication additive.

De plus, grâce à l'utilisation de matériaux CMC, il est plus simple d'intégrer le revêtement abradable sur l'anneau de turbomachine ou sur tout composant de turbomachine également en matériau CMC. Cela permet également de réduire le besoin en refroidissement au niveau du revêtement et de réduire la masse du composant sur lequel le revêtement abradable est appliqué.

Selon une caractéristique particulière de l'invention, le taux volumique de fibres courtes discontinues est compris entre 10 % et 25 % du volume de la structure à cellules tubulaires.

Selon une autre caractéristique particulière de l'invention, les cellules tubulaires sont en forme de nids d'abeille.

Une structure en forme de nids d'abeilles permet d'avoir une géométrie bien connue, simple à réaliser et ayant déjà prouvé ses nombreuses qualités.

Un autre objet de l'invention est un procédé de fabrication d'un revêtement abradable selon l'invention comprenant :
- l'obtention d'un assemblage comprenant une première préforme de la structure à cellules tubulaires montée sur une deuxième préforme ou sur un composant de turbomachine, la première préforme comprenant un renfort fibreux de fibres courtes discontinues ayant une longueur comprise entre 50 µm et 500 µm, et la deuxième préforme ou le composant de turbomachine comprenant un renfort fibreux de fibres continues, et
- la densification de la première préforme de l'assemblage par infiltration par une composition fondue comprenant du silicium.

Selon une caractéristique particulière de l'invention, la première préforme est montée sur la deuxième préforme et, il y a une co-densification des première et deuxième préformes par la composition fondue.

Selon une autre caractéristique particulière de l'invention, la première préforme est montée sur le composant de turbomachine et, la composition fondue permet de souder la structure à cellules tubulaires au composant.

Selon une autre caractéristique particulière de l'invention, la première préforme est montée sur une piste d'abradable du composant de turbomachine.

Selon une autre caractéristique particulière de l'invention, l'obtention de l'assemblage comprend une obtention de la première préforme, par fabrication additive ou par moulage par injection de poudre, à partir d'un mélange présent dans un liant et comprenant une poudre matricielle et des fibres courtes discontinues.

Selon une autre caractéristique particulière de l'invention, la deuxième préforme est une préforme d'un anneau de premier étage d'une turbomachine basse pression ou le composant de turbomachine est un anneau de premier étage d'une turbomachine basse pression.

Selon une autre caractéristique particulière de l'invention, la deuxième préforme est une préforme d'un stator de turbomachine ou le composant de turbomachine est un stator de turbomachine placé en regard de léchettes situées sur un rotor en vis-à-vis du stator.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, un anneau de premier étage d'une turbomachine basse pression comprenant un revêtement abradable selon un mode de réalisation de l'invention en vis-à-vis de léchettes d'un rotor.
[Fig. 2] La figure 2 représente, de manière schématique et partielle, un anneau de premier étage d'une turbomachine basse pression comprenant un revêtement abradable selon un mode de réalisation de l'invention.
[Fig. 3] La figure 3 représente, de manière schématique et partielle, différentes géométries de structures à cellules tubulaires d'un revêtement abradable selon l'invention.
[Fig. 4] La figure 4 représente, de manière schématique et partielle, le procédé de fabrication d'un revêtement abradable selon un mode de réalisation de l'invention.

### Description des modes de réalisation

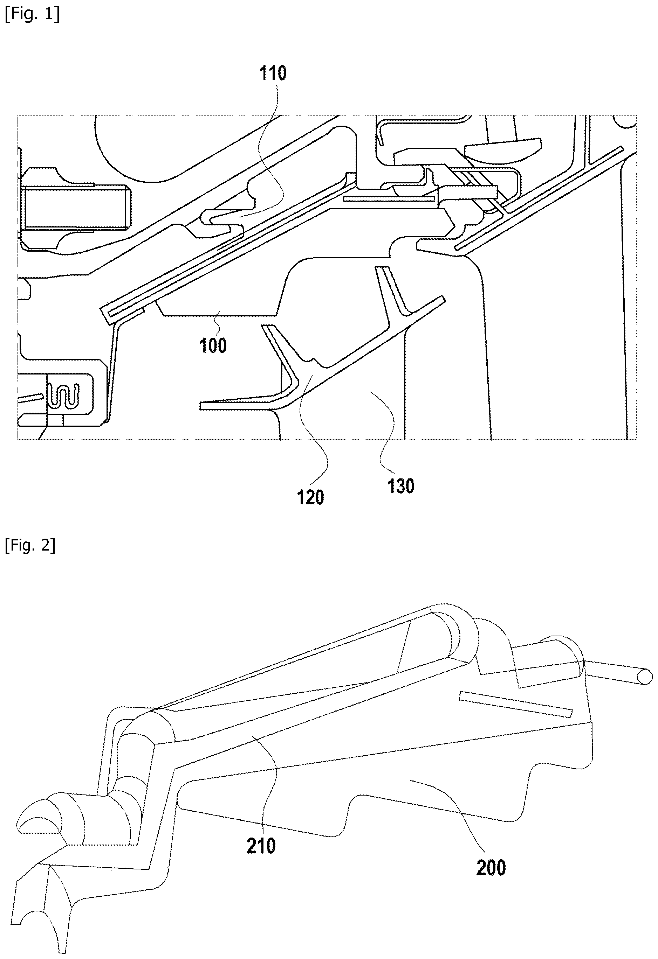

Les figures 1 et 2 représentent, de manière schématique et partielle, un anneau 110 de premier étage d'une turbomachine basse pression comprenant un revêtement abradable 100 selon un mode de réalisation de l'invention.

L'anneau 110 comprend un revêtement abradable 100 placé sur une surface interne de l'anneau 110 en vis-à-vis de léchettes 120. Les léchettes 120 sont placées sur un rotor 130 en vis-à-vis du revêtement 100 de l'anneau 110.

Conformément à l'invention, le revêtement abradable 100 comprend une structure à cellules tubulaires. La structure à cellules tubulaires comprend un renfort fibreux de fibres courtes discontinues ayant une longueur comprise entre 50 µm et 500 µm densifié par une matrice céramique.

L'anneau 110 étant généralement également réalisé en matériau CMC, il y aura donc une continuité entre les matériaux de l'anneau 110 et du revêtement 100, ce qui permet de faciliter la gestion des dilatations différentielles, dues aux températures élevées, dans cette zone.

Les léchettes 120 placées en vis-à-vis du revêtement abradable 100 sur un rotor 130 permettent de gérer la pénétration des aubes mobiles dans l'anneau 110 selon les phases de vol. Cela permet également de gérer l'étanchéité entre l'anneau 110 et le rotor 130 et d'optimiser les pertes aérodynamiques.

Plus généralement, l'anneau 110 peut être un élément d'un stator d'une turbomachine.

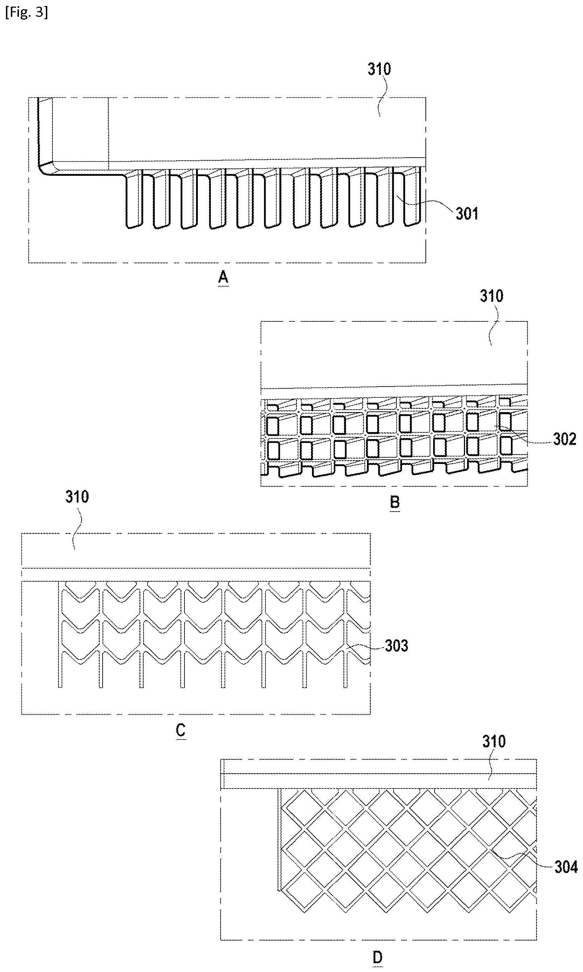

La figure 3 représente différentes géométries possibles d'une structure à cellules tubulaires d'un revêtement abradable selon l'invention.

Sur la figure 3A, la structure 301 comprend des cellules rectangulaires formant sur la surface d'un composant de turbomachine 310 une seule rangée de cellules rectangulaires.

Sur la figure 3B, la structure 302 comprend des cellules rectangulaires formant sur la surface d'un composant de turbomachine 310 plusieurs rangées de cellules rectangulaires ou carrées.

Sur la figure 3C, la structure 303 forme sur la surface du composant de turbomachine 310 plusieurs rangées de cellules de forme polygonale.

Sur la figure 3D, la structure 304 forme sur la surface du composant de turbomachine 310 plusieurs rangées de cellules en forme de losange.

Le composant 310 est par exemple un secteur d'anneau de turbomachine.

Ces quatre exemples de structure 301, 302, 303 et 304 sont plus facilement réalisables en fabrication additive qu'une structure ayant des cellules de forme alvéolaire.

Quel que soit le mode de réalisation de l'invention, le taux volumique de fibres courtes discontinues dans la structure à cellules tubulaires peut être compris entre 10 % et 25 % du volume de la structure. Il est, par exemple, de 15 %.

Quel que soit le mode de réalisation de l'invention, les cellules de la structure peuvent avoir une géométrie en nids d'abeilles, et plus particulièrement, elles peuvent avoir une forme telle que décrite en référence aux figures 3A, 3B, 3C ou 3D, ou être de forme alvéolaire.

La structure à cellules tubulaires peut également être un volume rempli du matériau CMC à renfort en fibres courtes discontinues, ayant une porosité minimale de 5 %.

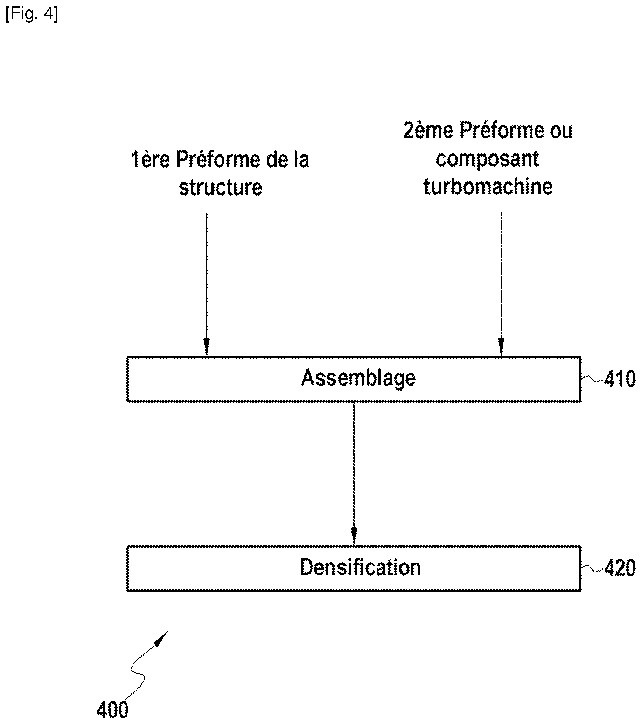

La figure 4 représente, de manière schématique et partielle, un procédé de fabrication 400 d'un revêtement abradable selon un mode de réalisation de l'invention.

Le procédé 400 comprend d'abord l'obtention d'un assemblage 410. L'assemblage comprend une première préforme de la structure à cellules tubulaires montée sur une deuxième préforme ou sur un composant de turbomachine.

La première préforme comprend un renfort fibreux de fibres courtes tandis que la deuxième préforme ou le composant de turbomachine peut comprendre un renfort fibreux de fibres continues ou un renfort fibreux tissé, le renfort étant densifié par une matrice céramique.

Le procédé 400 comprend ensuite la densification 420 de la première préforme de l'assemblage. La densification 420 est faite par infiltration de la première préforme par une composition fondue comprenant du silicium. La densification 420 permet de former une matrice céramique dans la première préforme et de lier la première préforme à la deuxième préforme ou au composant. En effet, durant la densification 420, la composition fondue va coloniser la porosité de la préforme de la structure à cellules tubulaires et lier cette préforme à la deuxième préforme ou au composant de turbomachine.

Si lors de l'obtention de l'assemblage 410, on monte la première préforme sur la deuxième préforme, il est également possible de co-densifier les première et deuxième préformes par la composition fondue lors de l'étape de densification 420. Cela permet de former une matrice commune aux deux préformes et de lier la structure à cellules tubulaires du revêtement abradable au composant issu de la deuxième préforme.

Si lors de l'assemblage 410, on monte la première préforme sur le composant de turbomachine, alors l'infiltration de la composition fondue dans la première préforme va permettre de souder ou braser la structure au composant.

De plus, on peut également monter la première préforme sur une piste d'abradable présente sur le composant de turbomachine. Dans ce cas, lors de la densification 420, la composition fondue a pour effet de souder la structure à la piste d'abradable et au composant de turbomachine.

Cette soudure ou brasure et la matrice commune assurent le passage d'effort entre la structure du revêtement et le composant de turbomachine et permet d'assurer une continuité métallique.

Selon une caractéristique particulière de l'invention, le procédé de fabrication 400 comprend également une étape d'usinage réalisée après la densification 420 pour usiner l'assemblage densifié à de nouvelles cotes, par exemple aux cotes aéronautiques.

Selon une autre caractéristique particulière de l'invention, la préforme de la structure du revêtement est obtenue à partir de la compaction d'une ébauche comprenant le renfort fibreux de fibres courtes discontinues présent dans un liant. La compaction peut être une compaction isostatique à chaud ou une compaction isostatique à froid ou encore un frittage flash (« Spark Plasma Sintering » en anglais).

Selon une autre caractéristique particulière de l'invention, la première préforme est obtenue à partir d'un mélange présent dans un liant et comprenant une poudre matricielle et des fibres courtes discontinues mis en œuvre dans un procédé de fabrication additive ou dans un procédé de moulage par injection de poudre.

Les liants utilisables pour réaliser la préforme du talon peuvent comprendre au moins un polymère thermoplastique. Par exemple, le liant peut comprendre au moins un composé choisi parmi l'alcool polyvinylique (PVA), le polyéthylène glycol (PEG), le polypropylène (PP), le polyoxyméthylène (POM) ou le polytéréphtalate d'éthylène (PET).

Les liants peuvent également comprendre au moins un polymère thermodurcissable. Par exemple, ils peuvent comprendre au moins un composé choisi parmi les résines époxydes, les résines phénoliques ou les résines pré-céramiques.

Les fibres courtes discontinues du renfort de la première préforme peuvent être obtenues de différentes manières : broyage, découpe, concassage de chutes textiles ou encore bobines de fil brut.

Les fibres courtes ayant une longueur comprise entre 50 µm et 500 µm, par exemple sensiblement de 250 µm. Leur diamètre peut être identique à celui des fibres de base dont elles sont issues, il est, par exemple, compris entre 8 µm et 14 µm. Les procédés d'obtention de fibres courtes discontinues sont connus de l'homme du métier, celui-ci saura donc déterminer les paramètres de fabrication permettant d'obtenir les longueurs de fibres courtes discontinues nécessaires à l'application visée.

Selon une caractéristique particulière de l'invention, les fibres courtes discontinues sont revêtues d'une interphase. L'interphase est, par exemple, constituée d'une couche de nitrure de bore BN. Celle-ci permet de dévier les fissures matricielles de la matrice qui sera formée lors de l'étape de densification 420.

Par exemple, l'interphase est constituée d'une couche de nitrure de bore BN elle-même revêtue d'une couche de carbure de silicium SiC. La couche inférieure d'interphase en BN assure le rôle de déviateur de fissure matricielle tandis que la couche supérieure d'interphase en SiC assure l'intégrité de la couche inférieure de l'interphase et de la fibre sous-jacente.

Les épaisseurs de l'interphase et des couches pouvant la constituer sont définies par l'homme du métier selon l'application visée. Par exemple, la couche inférieure de nitrure de bore a une épaisseur de 500 nm et la couche supérieure de carbure de silicium a une épaisseur de 1000 µm.

Dans un exemple de réalisation de l'invention, on obtient une première préforme de la structure à cellules tubulaires du revêtement en mélangeant des charges céramiques à des organiques pour obtenir un mélange (« feedstock »). Les charges céramiques sont les poudres matricielles et les fibres courtes discontinues. Le taux volumique d'organique correspond au taux volumique de silicium in fine dans la structure en matériau CMC avec renfort de fibres courtes discontinues. Il en est de même pour les charges céramiques. Après homogénéisation de ce mélange, celui-ci est mis en œuvre par un procédé de fabrication additive ou de fabrication directe de type moulage par injection de poudre (« Powder Injection Molding » (PIM) en anglais). Le procédé de fabrication additive est, par exemple, un dépôt de fil fondu. On obtient alors un corps cru (« greenbody ») qui peut éventuellement subir une étape d'usinage.

Le corps cru est ensuite débarrassé de ses organiques par des traitements thermochimiques. Cela consiste, par exemple, à former un premier réseau poral sans dilatation de la matière évitant ainsi toute fissuration prématurée, puis à retirer les organiques par action thermique. Lors du retrait, la matière peut se dilater dans le premier réseau poral formé. Le matériau obtenu n'est plus constitué que des charges céramiques et sa tenue mécanique est très limitée. Celui-ci est alors disposé sur l'aubage ou la préforme de l'aubage et forme ainsi la préforme du talon.

Quel que soit le mode de réalisation de l'invention, les fibres courtes discontinues peuvent être des fibres de carbure de silicium SiC présentant une teneur en oxygène inférieure ou égale à 1 % en pourcentage atomique. Ces fibres correspondent à un type de fibre en SiC disponible en quantités industrielles par comparaison avec des filaments de carbure de silicium issus d'un dépôt chimique en phase vapeur (filaments de SiC CVD) à âme carbone habituellement utilisés dans la fabrication de pièces en matériau composite à matrice métallique. Ces fibres en SiC peuvent par exemple être des fibres fournies sous la dénomination « Hi-Nicalon-S » par la société japonaise NGS.

Quel que soit le mode de réalisation de l'invention, la structure à cellules tubulaires peut comprendre une matrice céramique constituée de poudres de carbure de silicium et de silicium ainsi que d'un renfort fibreux de fibres courtes discontinues dans lequel :
- les poudres de carbure de silicium ont un taux volumique compris entre 30 % et 50 % du volume du talon ;
- les poudres de silicium ont un taux volumique compris entre 25 % et 45 % du volume du talon ; et
- les fibres courtes discontinues avec un taux volumique compris entre 10 % et 25 % du volume du talon.

Préférentiellement, le taux volumique de poudres de carbure de silicium est de 40 %, celui des poudres de silicium est de 35 % et celui des fibres courtes discontinues de 15 %.

Dans un exemple de réalisation de l'invention, les poudres de carbure de silicium qui forment la matrice céramique du talon sont des poudres submicroniques ayant une taille moyenne d50 comprise entre 200 µm et 1000 µm. La taille moyenne d50 signifie que la moitié des particules ont une dimension caractéristique inférieure ou égale à d50 et que l'autre moitié des particules a une dimension caractéristique supérieure ou égale à d50.

Dans un autre exemple de réalisation de l'invention, les poudres de carbure de silicium qui forment la matrice céramique du talon comprennent des particules plus grosses ayant une taille moyenne d₅₀ comprise entre 1 µm et 50 µm, et plus précisément entre 15 µm et 25 µm.

La granulométrie des poudres permet de jouer sur le réseau poral au sein du matériau composite formant la structure du revêtement.

L'expression « compris(e) entre ... et ... » doit se comprendre comme incluant les bornes.

## Revendications

1. Revêtement abradable (100, 200) comprenant une structure à cellules tubulaires (301, 302, 303, 304), **caractérisé en ce que** la structure à cellules tubulaires comprend un renfort fibreux de fibres courtes discontinues densifié par une matrice céramique, les fibres courtes discontinues ayant une longueur comprise entre 50 µm et 500 µm.

2. Revêtement abradable selon la revendication 1, dans lequel le taux volumique de fibres courtes discontinues est compris entre 10 % et 25 % du volume de la structure à cellules tubulaires.

3. Revêtement abradable selon l'une quelconque des revendications 1 ou 2, dans lequel les cellules tubulaires sont en forme de nids d'abeille.

4. Procédé de fabrication (400) d'un revêtement abradable selon l'une quelconque des revendications 1 à 3 comprenant :
- l'obtention d'un assemblage (410) comprenant une première préforme de la structure à cellules tubulaires montée sur une deuxième préforme ou sur un composant de turbomachine, la première préforme comprenant un renfort fibreux de fibres courtes discontinues et la deuxième préforme ou le composant de turbomachine comprenant un renfort fibreux de fibres continues, et
- la densification (420) de la première préforme de l'assemblage par infiltration par une composition fondue comprenant du silicium.

5. Procédé de fabrication d'un revêtement abradable selon la revendication 4, dans lequel la première préforme est montée sur la deuxième préforme et dans lequel, il y a une co-densification des première et deuxième préformes par la composition fondue.

6. Procédé de fabrication d'un revêtement abradable selon la revendication 4, dans lequel la première préforme est montée sur le composant de turbomachine et dans lequel, la composition fondue permet de souder la structure à cellules tubulaires au composant.

7. Procédé de fabrication d'un revêtement abradable selon la revendication 6, dans lequel la première préforme est montée sur une piste d'abradable du composant de turbomachine.

8. Procédé de fabrication d'un revêtement abradable selon l'une quelconque des revendications 4 à 7, dans lequel l'obtention de l'assemblage comprend une obtention de la première préforme, par fabrication additive ou par moulage par injection de poudre, à partir d'un mélange présent dans un liant et comprenant une poudre matricielle et des fibres courtes discontinues.

9. Procédé de fabrication selon l'une quelconque des revendications 4 à 8 dans lequel, la deuxième préforme est une préforme d'un anneau (110, 210, 310) de premier étage d'une turbomachine basse pression ou le composant de turbomachine est un anneau de premier étage d'une turbomachine basse pression.

10. Procédé de fabrication selon l'une quelconque des revendications 4 à 8 dans lequel, la deuxième préforme est une préforme d'un stator de turbomachine (110, 210) ou le composant de turbomachine est un stator de turbomachine placé en regard de léchettes (120) situées sur un rotor (130) en vis-à-vis du stator.

## Patentansprüche

1. Verschleißbare Beschichtung (100, 200) umfassend eine Struktur aus rohrförmigen Zellen (301, 302, 303, 304), **dadurch gekennzeichnet, dass** die Struktur aus rohrförmigen Zellen eine Faserverstärkung aus kurzen, nicht durchgängigen Fasern umfasst, die durch eine keramische Matrix verdichtet ist, wobei die kurzen, diskontinuierlichen Fasern eine Länge zwischen 50 µm und 500 µm aufweisen.

2. Verschleißbare Beschichtung nach Anspruch 1, wobei der Volumenanteil an kurzen, nicht durchgängigen Fasern zwischen 10 % und 25 % des Volumens der Struktur aus rohrförmigen Zellen beträgt.

3. Verschleißbare Beschichtung nach einem der Ansprüche 1 oder 2, wobei die rohrförmigen Zellen wabenförmig sind.

4. Verfahren zur Herstellung (400) einer verschleißbaren Beschichtung nach einem der Ansprüche 1 bis 3, umfassend:
- das Herstellen einer Anordnung (410), die eine erste Vorform der Struktur aus rohrförmigen Zellen umfasst, die auf einer zweiten Vorform oder einer Komponente einer Turbomaschine montiert ist, wobei die erste Vorform eine Faserverstärkung aus kurzen, nicht durchgängigen Fasern umfasst und die zweite Vorform oder die Turbomaschinen-Komponente eine Faserverstärkung aus durchgehenden Fasern umfasst, und
- die Verdichtung (420) der ersten Vorform der Anordnung durch Infiltration mit einer geschmolzenen Zusammensetzung, die Silizium umfasst.

5. Verfahren zur Herstellung einer verschleißbaren Beschichtung nach Anspruch 4, wobei die erste Vorform auf der zweiten Vorform montiert wird und wobei eine gemeinsame Verdichtung der ersten und zweiten Vorform durch die geschmolzene Zusammensetzung erfolgt.

6. Verfahren zur Herstellung einer verschleißbaren Beschichtung nach Anspruch 4, wobei die erste Vorform auf der Turbomaschinen-Komponente montiert wird und die geschmolzene Zusammensetzung es erlaubt, die Struktur aus rohrförmigen Zellen mit der Komponente zu verschweißen.

7. Verfahren zur Herstellung einer verschleißbaren Beschichtung nach Anspruch 6, wobei die erste Vorform auf einer Verschleiß-Lauffläche der Turbomaschinen-Komponente montiert wird.

8. Verfahren zur Herstellung einer verschleißbaren Beschichtung nach einem der Ansprüche 4 bis 7, wobei der Erhalt der Anordnung den Erhalt der ersten Vorform durch additive Herstellung oder Pulverspritzgießen aus einer Mischung umfasst, die in einem Bindemittel vorliegt und eine Pulvermatrix und kurze, nicht durchgängige Fasern umfasst.

9. Herstellungsverfahren nach einem der Ansprüche 4 bis 8, wobei die zweite Vorform eine Vorform eines Rings (110, 210, 310) der ersten Stufe einer Niederdruck-Turbomaschine ist oder die Turbomaschinen-Komponente ein Ring der ersten Stufe einer Niederdruck-Turbomaschine ist.

10. Herstellungsverfahren nach einem der Ansprüche 4 bis 8, wobei die zweite Vorform eine Vorform eines Turbomaschinen-Stators (110, 210) ist oder die Turbomaschinen-Komponente ein Turbomaschinen-Stator ist, der Nuten (120) gegenüber angeordnet ist, die sich auf einem Rotor (130) befinden, der dem Stator gegenüberliegt.

## Claims

1. An abradable coating (100, 200) comprising a tubular cell structure (301, 302, 303, 304), **characterized in that** the tubular cell structure comprises a fibrous reinforcement of discontinuous short fibers which is densified by a ceramic matrix, the discontinuous short fibers having a length comprised between 50 µm and 500 µm.

2. The abradable coating according to claim 1, wherein the volume ratio of discontinuous short fibers is comprised between 10% and 25% of the volume of the tubular cell structure.

3. The abradable coating according to any one of claims 1 or 2, wherein the tubular cells are honeycomb-shaped.

4. A method for manufacturing (400) an abradable coating according to any one of claims 1 to 3 comprising:
- obtaining an assembly (410) comprising a first preform of the tubular cell structure mounted on a second preform or on a turbomachine component, the first preform comprising a fibrous reinforcement of discontinuous short fibers and the second preform or the turbomachine component comprising a fibrous reinforcement of continuous fibers, and
- densifying (420) the first preform of the assembly by infiltration with a molten composition comprising silicon.

5. The method for manufacturing an abradable coating according to claim 4, wherein the first preform is mounted on the second preform and wherein there is a co-densification of the first and second preforms by the molten composition.

6. The method for manufacturing an abradable coating according to claim 4, wherein the first preform is mounted on the turbomachine component and wherein the molten composition makes it possible to weld the tubular cell structure to the component.

7. The method for manufacturing an abradable coating according to claim 6, wherein the first preform is mounted on an abradable track of the turbomachine component.

8. The method for manufacturing an abradable coating according to any one of claims 4 to 7, wherein obtaining the assembly comprises obtaining the first preform, by additive manufacturing or by powder injection molding, from a mixture present in a binder and comprising a matrix powder and discontinuous short fibers.

9. The method for manufacturing an abradable coating according to any one of claims 4 to 8 wherein, the second preform is a preform of first-stage ring (110, 210, 310) of a low-pressure turbomachine or the turbomachine component is a first-stage ring of a low-pressure turbomachine.

10. The method for manufacturing an abradable coating according to any one of claims 4 to 8 wherein, the second preform is a preform of a turbomachine stator (110, 210) or the turbomachine component is a turbomachine stator placed facing wipers (120) located on a rotor (130) opposite the stator.
